# EUROPEAN PATENT APPLICATION

(11) **EP 3 734 927 A1**
(43) Date of publication of application: **04.11.2020**
(21) Application number: 18894087.8
(22) Date of filing: 19.12.2018
(51) Int. Cl.: H04L 29/06

(54) **CONTENT SERVICE IMPLEMENTATION METHOD AND DEVICE, AND CONTENT DELIVERY NETWORK NODE**

(30) Priority: 26.12.2017 CN 201711436227
(71) Applicant: ZTE Corporation, Shenzhen, Guangdong 518057 (CN)
(72) Inventor: XIONG, Qin, Shenzhen, Guangdong 518057 (CN); CAO, Jia, Shenzhen, Guangdong 518057 (CN); ZHANG, Xiaoqu, Shenzhen, Guangdong 518057 (CN); SHI, Meikang, Shenzhen, Guangdong 518057 (CN); LIU, Xuean, Shenzhen, Guangdong 518057 (CN); ZHANG, Yu, Shenzhen, Guangdong 518057 (CN); CHEN, Yingchuan, Shenzhen, Guangdong 518057 (CN)
(74) Representative: Regimbeau
(86) International application number: PCT/CN2018/122056
(87) International publication number: WO 2019/128800

(57) **Abstract**

Provided are a content service implementation method and apparatus and a content delivery network node. The method includes: sending, to an upper entity, a first download request for requesting to download a first-part fragment of media content; receiving the first-part fragment of the media content sent by the upper entity; receiving, from a lower entity, a second download request for requesting to download the first-part fragment of the media content; and sending the first-part fragment of the media content to the lower entity. In the embodiments of the present invention, before the download request for requesting to download the first-part fragment of the media content is received from the lower entity, the first-part fragment of the media content has been acquired from the upper entity and can be directly returned to the lower entity, so that the response delay of the media content service is reduced. In a video traffic application scenario, the response delay from a user terminal requesting a service to a first video picture is relatively small.

## Description

### TECHNICAL FIELD

The present invention relates to the technical field of communications and, in particular, to a content service implementation method and device, and a content delivery network (CDN) node.

### BACKGROUND

In a CDN, a transmission network, nodes are deployed at the edge of the network, and audios, videos, text, pictures and other content stored in the network are delivered to the edge nodes of the network. When a user requests a content service, the user directly acquires the service on a CDN node at the edge of the network, so as to reduce a transmission bandwidth of a backbone network and meanwhile improve the service response speed for the user. At present, the CDN is widely used in an Internet Protocol Television (IPTV) and an Over The Top (OTT) (which refers to that Internet companies have gone beyond operators to develop various videos and data service traffic based on open Internet) Internet telecommunication traffic system, and have been widely deployed all over the world. With the continuous increase in the broadband rate of a fixed network, the rapid development of mobile broadband and the popularization of a 4K video technology, the number of pieces of content stored in the CDN rapidly increases. At the same time, the number of IPTV users based on the proprietary network of operators and the number of OTT video users based on the Internet increase, which causes the requirements on the equipment and technology of the CDN to become more demanding. The requirements are as follows: on one hand, the number of pieces of content stored in the CDN increases, and the code rate of a single piece of content increases, which requires a large amount of storage, so that the cost of CDN is higher and higher; on the other hand, users' preferences for video content are getting more and more different, so that for the CDN, whether the content is the popular content that most users order or the unpopular content that a few users watch, when the users watch the content, the delay for users to obtain CDN services should be as small as possible and the system should be able to quickly respond to user services.

### SUMMARY

Embodiments of the present invention provide a content service implementation method and apparatus, and a CDN node, so as to reduce response delay of a media content service.

An embodiment of the present invention provides a content service implementation method. The method includes steps described below.

A first download request for requesting to download a first-part fragment of media content is sent to an upper entity.

The first-part fragment of the media content sent by the upper entity is received.

A second download request for requesting to download the first-part fragment of the media content is received from a lower entity.

The first-part fragment of the media content is sent to the lower entity.

An embodiment of the present invention further provides a content service implementation apparatus. The apparatus includes a first sending module, a first reception module, a second reception module, and a second sending module.

The first sending module is configured to send, to an upper entity, a first download request for requesting to download a first-part fragment of media content.

The first reception module is configured to receive the first-part fragment of the media content sent by the upper entity.

The second reception module is configured to receive, from a lower entity, a second download request for requesting to download the first-part fragment of the media content.

The second sending module is configured to send the first-part fragment of the media content to the lower entity.

An embodiment of the present invention further provides a content delivery network node. The content delivery network node includes a processor, a memory configured to store instructions executable by the processor, and a transmission apparatus configured to perform information transceiving communication according to control of the processor.

The processor is configured to perform the following operations.

A first download request for requesting to download a first-part fragment of media content is sent to an upper entity.

The first-part fragment of the media content sent by the upper entity is received.

A second download request for requesting to download the first-part fragment of the media content is received from a lower entity.

The first-part fragment of the media content is sent to the lower entity.

In the embodiments of the present invention, before the download request for requesting to download the first-part fragment of the media content is received from the lower entity, the first-part fragment of the media content has been acquired from the upper entity and can be directly returned to the lower entity, so that the response delay of the media content service is reduced. In a video traffic application scenario, the response delay from the user terminal requesting the service to the first video picture is relatively small.

In an implementation, the first-part fragment of the media content is stored locally, and since merely M fragments of a single piece of media content are stored in the CDN node, the storage space of the CDN node consumed by the single piece of media content is reduced to M/N of the storage space in a manner of storing all the media content. Therefore, more different pieces of media content can be stored on the CDN node with the same storage capacity. Meanwhile, since the number of different pieces of media content stored on the CDN node is larger, the hit rates of the CDN to the media service requests of different users are higher. In a system having multiple CDN nodes, more content can be hit in the method of the present invention compared with the manner of storing all the media content from a system level, and the method of the present invention is superior to the manner of storing all the media content from the aspect of the average access speed of users of the CDN.

In conclusion, in a CDN system, the present application can obtain better user media service delay under the condition of consuming less storage. The more media content and the more user terminals, the more profits get by using the present application.

Additional features and advantages of the preset invention will be set forth in the specification which follows, and in part will be apparent from the specification, or may be understood by implementing the present invention. The object and other advantages of the present invention can be achieved and obtained through structures set forth in the specification, claims and drawings.

### BRIEF DESCRIPTION OF DRAWINGS

The drawings are used for providing a further understanding of the technical solutions of the present invention, constitute a part of the specification, explain the technical solutions of the present invention in conjunction with the embodiments of the present application, and do not limit the technical solutions of the present invention.
FIG. 1 is a schematic diagram illustrating composition of a CDN system according to an embodiment of the present invention;
FIG. 2 is a flowchart of a content service implementation method according to an embodiment of the present invention;
FIG. 3 is a flowchart of HyperText Transfer Protocol (HTTP) Live Streaming (HLS) media content delivery according to application example one of the present invention;
FIG. 4 is a flowchart of an iPad terminal requesting a media service according to application example one of the present invention;
FIG. 5 is a flowchart of Dynamic Adaptive Streaming over HTTP (DASH) media content delivery according to application example two of the present invention;
FIG. 6 is a flowchart of a Chrome browser requesting a media service according to application example two of the present invention;
FIG. 7 is a flowchart of Microsoft Smooth Streaming (MSS) media content delivery according to application example three of the present invention;
FIG. 8 is a flowchart of an IE browser requesting a media service according to application example three of the present invention;
FIG. 9 is a flowchart of HTTP Dynamic Streaming (HDS) content delivery according to application example four of the present invention;
FIG. 10 is a flowchart of a Chrome browser accessing a 4Mb-code-rate service according to application example four of the present invention;
FIG. 11 is a flowchart of an Android mobile phone accessing a 600K-code-rate service according to application example four of the present invention;
FIG. 12 is a schematic diagram illustrating composition of a content service implementation apparatus according to an embodiment of the present invention; and
FIG. 13 is a schematic diagram illustrating composition of a CDN node according to an embodiment of the present invention.

### DETAILED DESCRIPTION

Objects, technical solutions and advantages of the present invention will be clearer from a detailed description of embodiments of the present invention in conjunction with the drawings. It is to be noted that if not in collision, the embodiments and features therein in the present application may be arbitrarily combined with each other.

The steps illustrated in the flowcharts among the drawings may be performed by, for example, a computer system including a group of computer-executable instructions. Moreover, although logical sequences are illustrated in the flowcharts, the illustrated or described steps may be performed in sequences different from those described herein in some cases.

In the related art, the CDN provides content services mainly in two manners described blow.

In manner 1, content is stored in a CDN central node, a user terminal accesses to a CDN edge node to request a service. When no content exists on the edge node, relay backhaul to the CDN central node or a source station is performed. The edge node downloads data packets constituting the content in sequence, and then sends the data packets to the user terminal in sequence. In this manner, a large amount of storage on the edge node is not required, but from the time the user requests the service to the time the first-part data of the content of the service is acquired, the user needs to wait for one or more backhauls from the edge node to the central node. For the video content, the time delay for the user to watch the first frame of the video picture of the content is relatively large.

In manner 2, a CDN management node sends instructions to a CDN node, or the CDN node downloads the content from the content source station to the local in advance according to a buffer strategy. When the user requests the service, the CDN node directly uses the content buffered locally to provide the service for the user. In this manner, the CDN node is required to store the entire content. With the explosive growth of the number of pieces of content, this manner requires more storage on the edge node. In addition, the number of the CDN edge nodes is generally large, resulting in high cost of the CDN, which is unacceptable to CDN network operators.

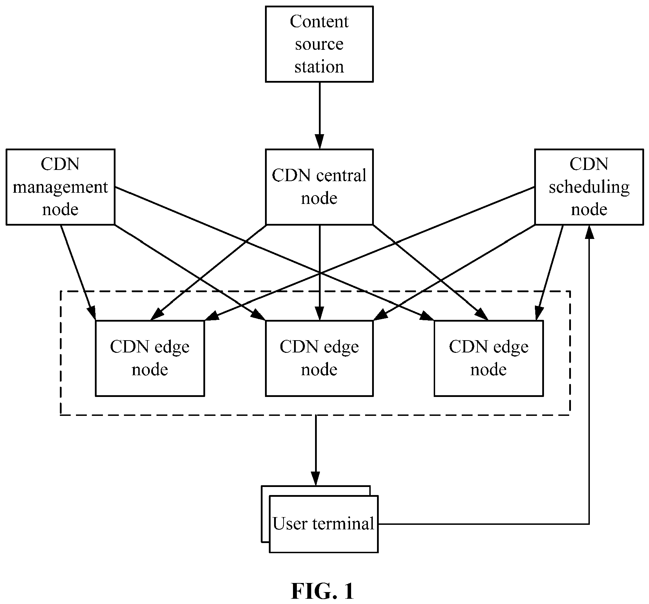

As shown in FIG. 1, a CDN system in an embodiment of the present invention includes a content source station, one or more CDN nodes, and a user terminal. Optionally, the CDN system further includes a CDN management node and a CDN scheduling node.

The content source station has the ability to store media content and the ability to provide media content download services for CDN nodes, and is used for storing Internet content. The format of the stored media content may be a video, picture, document, etc. Media content may be stored on the source station in a manner of a complete file or multiple fragment files after slicing. Meanwhile, the content source station is able to provide content download services for the CDN nodes. The externally supported transmission protocol includes, but is not limited to, HTTP Live Streaming, DASH, MSS, HDS, Real Time Stream Protocol (RTSP), Real Time Messaging Protocol (RTMP). When a CDN node requests for downloading content from the content source station, the content source station may provide fragments of the content for downloading.

The CDN node has the ability to store media content, and is able to download a first-part fragment of content from the content source station or an upper CDN node, buffer the first-part fragment, and then provide a media service of the media content for a user terminal or provide a download service for a lower CDN node. In practical applications, CDN nodes may be divided into a CDN central node and CDN edge nodes according to distribution positions of the CDN nodes in the network. The CDN central node directly downloads content from the content source station, and the CDN edge nodes download content from the CDN central node. Media content transmission protocols between the CDN node and the content source station and between multi-level CDN nodes include, but are not limited to, the HLS, DASH, MSS, HDS, RTSP and RTMP. A CDN node may request fragment list information of media content from the content source station or an upper node, and download a first-part fragment in the fragment list information in advance according to fragment information in the fragment list information. The CDN node has the ability to persistently store the downloaded content fragments. When a user terminal subsequently requests a service, the CDN node may read the first-part fragment of the media content in the buffer and return the fragment content to the terminal. The storage medium in the CDN node includes, but is not limited to, a memory, a solid state drive (SSD) and a magnetic array. The media transmission protocol between the CDN node and the user terminal includes, but is not limited to, the HLS, DASH, MSS, HDS, RTSP and RTMP. The CDN node may buffer, according to the media service request of the user terminal, the first-part fragment of the service content requested by the user. The CDN node may receive a content delivery instruction from the CDN management node, and download the first-part fragment and the remaining fragments of the media content from the content source station or the upper node according to the information of the media content in the content delivery instruction. The CDN node may receive a status collection message of the CDN scheduling node and report the status of the CDN node itself to the CDN scheduling node.

The user terminals are scattered on the edge of the network. A user terminal may initiate a CDN service request to a CDN node and establish a communication connection. The user terminal equipment establishes an application layer protocol session with the CDN node, and interacts with the CDN node through an application layer protocol to receive media content data transmitted back from the CDN node, so as to obtain Internet services such as content downloading, video playing and web page acceleration. The media transmission protocol interacted between the user terminal and the CDN node includes, but is not limited to, the HLS, DASH, MSS, HDS, RTSP and RTMP. The user terminal supports, after acquiring the first-part fragment of the media content from the CDN node through the above media transmission protocol, processing the first-part fragment and immediately converting the first-part fragment into a media service.

The CDN management node may send a content delivery instruction to the CDN node. The content delivery instruction carries information of the content and information of the content source station, so that the CDN node may download the first-part fragment from the content source station in advance.

The CDN scheduling node supports detecting the status of CDN nodes at all levels, collecting the loads of the CDN nodes, receiving a media service redirection request sent by the user terminal, and returning, according to a principle of proximity, information of the CDN node to which the user terminal belongs to the user terminal.

In the embodiment of the present invention, merely the first-part fragment of media content is delivered to the CDN node. When the user terminal requests the CDN node for the service of the media content, the CDN node can quickly return the first-part fragment of the media content to the user terminal, thus reducing the response delay of the media content service.

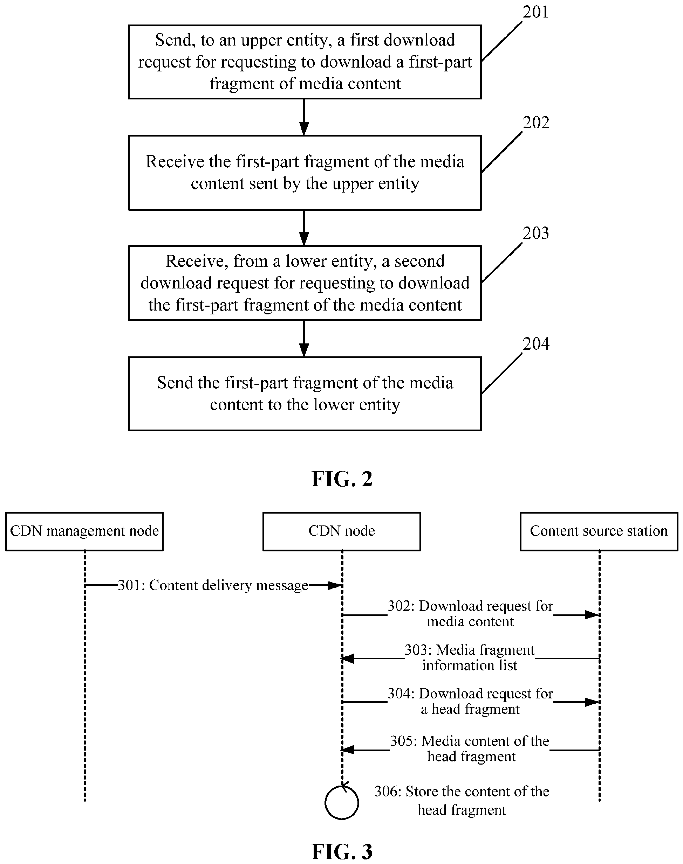

As shown in FIG. 2, the content service implementation method in an embodiment of the present invention is applied to CDN nodes and includes steps described below.

In step 201, a first download request for requesting to download a first-part fragment of media content is sent to an upper entity.

The upper entity may be a content source station or an upper CDN node.

The media content may be audio and video media content or document media content such as PDF and WORD documents, and is not limited in the embodiment of the present invention.

The first-part fragment may be simply referred to as the head fragment, refers to a minimum fragment file set of all media sessions forming the media content and required to ensure a continuous media service. In the fragment list of each media session, the first-part fragment includes the fragments arranged in front according to a fragment sequence, and may be the first fragment or the first several fragments, and may be determined according to fragment list information returned by the content source station or the upper entity. That is, the media content may be divided into N fragments, and the first-part fragment includes the first M fragments among the N fragments according to the fragment sequence, where M and N are positive integers, and M is less than or equal to N.

In the field of video playing, for media content constituted by multiple sessions such as audio, video and subtitles, the first-part fragment of the media content includes first-part fragments of all media sessions such as audio, video and subtitles. For media content with multiple code rates, the first-part fragment includes first-part fragments of all sessions in the media content with all code rates. In an implementation, when the media content is divided into fragment files, the playing duration of the first-part fragment is as small as possible, so that on one hand, the storage space required by the CDN node to buffer the first-part fragment is smaller, and on the other hand, the playing response time for the user terminal is shorter.

The transmission protocol used for sending the first download request may be, but is not limited to, the HTTP, RTSP and RTMP transmission protocols.

If the first-part fragment includes multiple fragments, the download requests for each single fragment may be sequentially sent to the upper entity, and the multiple fragments constituting the first-part fragment may be sequentially requested to be downloaded.

In step 202, the first-part fragment of the media content sent by the upper entity is received. The transmission protocol used for receiving the first-part fragment may include, but is not limited to, the HTTP, RTSP and RTMP

If the first-part fragment includes multiple fragments, the multiple fragments constituting the first-part fragment sent by the upper entity may be separately received.

In step 203, a second download request for requesting to download the first-part fragment of the media content is received from a lower entity.

The lower entity may be a user terminal or a lower CDN node.

The form of a media service for the lower entity includes, but is not limited to, video playing and file transmission.

The transmission protocol used for receiving the second download request may be, but is not limited to, the HTTP, RTSP and RTMP transmission protocols.

If the first-part fragment includes multiple fragments, the download requests for multiple single fragments sent by the lower entity may be received so that the multiple fragments constituting the first-part fragment are requested to be downloaded.

In step 204, the first-part fragment of the media content is sent to the lower entity.

The transmission protocol used for sending the first-part fragment may include, but is not limited to, the HTTP, RTSP and RTMP

If the first-part fragment includes multiple fragments, the multiple fragments constituting the first-part fragment may be separately sent to the lower entity in sequence.

In the embodiment of the present invention, before the download request for requesting to download the first-part fragment of the media content is received from the lower entity, the first-part fragment of the media content has been acquired from the upper entity and can be directly returned to the lower entity, so that the response delay of the media content service is reduced. In a video traffic application scenario, the response delay from the user terminal requesting a service to a first video picture is relatively small.

In an implementation, before the step 201, the method further includes steps described below. A buffer request for requesting to acquire the media content is sent to the upper entity, where the buffer request carries identifier information of the media content.

The fragment list information of the media content sent by the upper entity is received.

The buffer request for requesting to acquire the media content may also be referred to as a media content download request. The CDN node may receive an instruction from the CDN management node to trigger the buffer request or the CDN node may actively initiate the buffer request according to the buffer strategy of the CDN node itself.

The transmission protocol used for sending the buffer request may be, but is not limited to, the HTTP, RTSP and RTMP transmission protocols.

The fragment list information of the media content at least includes information of the first-part fragment, such as identifier information of the first-part fragment.

The format of the fragment list information of the media content may include, but is not limited to, the HLS, DASH, MSS and HDS.

The identifier information of the first-part fragment of the media content may be acquired according to the fragment list information, where the first download request carries the identifier information of the first-part fragment.

In an implementation, before the step 203, the method further includes steps described below.

A service request for requesting to acquire the media content is received from the lower entity, where the service request carries the identifier information of the media content.

The fragment list information of the media content is sent to the lower entity.

The transmission protocol used for receiving the service request may be, but is not limited to, the HTTP, RTSP and RTMP transmission protocols.

In an implementation, after the first-part fragment of the media content sent by the upper entity is received, the method further includes the following step: the first-part fragment of the media content is stored locally.

The step in which the first-part fragment of the media content is sent to the lower entity includes the following step: the locally stored first-part fragment of the media content is read, and the locally stored first-part fragment of the media content is sent to the lower entity.

The memory, SSD, magnetic array and other storage media may be used in the CDN node to store the first-part fragment, which is not limited in the embodiment of the present invention. When the SSD is used, the SSD may support, but is not limited to, Peripheral Component Interconnect Express (PCI-E) and Non-Volatile Memory Express (NVMe). The CDN node may read the first-part fragment in the memory, SSD, magnetic array and other storage media to improve the response speed.

In the embodiment of the present invention, the first-part fragment of the media content is stored locally, and since merely M fragments are stored in a single piece of media content on the CDN node, the storage space of the CDN node consumed by the single piece of media content is reduced to M/N of the storage space in a manner of storing all the media content. Therefore, more different pieces of media content can be stored on the CDN node with the same storage capacity. Meanwhile, since the number of different pieces of media content stored on the CDN node is larger, the hit rates of the CDN to the media service requests of different users are higher. In a system having multiple CDN nodes, more content can be hit in the method of the present invention compared with the manner of storing all the media content from a system level, and the method of the present invention is superior to the manner of storing all the media content from the aspect of the average access speed of users of the CDN.

In an implementation, before the download request for requesting to download the first-part fragment of the media content is sent to the upper entity, the method further includes a step described below.

The number M of fragments included in the first-part fragment of the media content is determined according to a selection strategy of the first-part fragment.

The selection strategy of the first-part fragment may be: selecting the number of fragments included in the first-part fragment according to one or more combinations of factors such as the length of time for playing the first-part fragment, the size of the first-part fragment, the type of the media content, the code rate of the media content, and the local storage capacity of the CDN node. For example, the selection is performed according to the length of time for playing the first-part fragment; the length of time for playing the first-part fragment is set to 2 minutes ∼ 5 minutes; if the playing duration of one fragment is 2 seconds, the first-part fragment should include at least the first 10 fragments; and if the playing duration of one fragment is 3 minutes, the first-part fragment may be the first fragment.

In an embodiment, the method further includes steps described below.

A third download request for requesting to download remaining fragments of the media content is received from the lower entity, where the remaining fragments are N-M fragments, except for M fragments included in the first-part fragment, among all N fragments of the media content.

A fourth download request for requesting to download the remaining fragments of the media content is sent to the upper entity.

The remaining fragments of the media content sent by the upper entity are received.

The remaining fragments of the media content are sent to the lower entity.

The transmission protocols used for receiving the third download request and sending the fourth download request may be, but is not limited to, the HTTP, RTSP and RTMP transmission protocols.

After receiving the third download request, the CDN node acquires the remaining fragments of the media content from the upper entity and sends the remaining fragments to the lower entity. Since the third download request may be sent at the same time as or immediately after the second download request, the user terminal has downloaded the remaining fragments before finishes playing the first-part fragment. Therefore, the delay does not occur when the remaining fragments are played, and the storage space of the CDN node is saved.

In some other embodiments, it is possible that the user terminal does not intend to play the remaining fragments after downloading and playing the first-part fragment, and then the third download request does not need to be sent and the remaining fragments do not need to be downloaded.

It is to be noted that the first, second, third and fourth of the above-mentioned first download request, second download request, third download request and fourth download request are merely for distinguishing between different download requests and do not represent a sequence, and in practical applications, the third download request may be performed after or at the same time as the second download request.

The implementation process of the embodiment of the present invention is described by taking a media content delivery process, a user terminal service scheduling process and a user terminal requesting media service process as examples.

### Media content delivery process:

A CDN node sends a buffer request for media content to a content source station, where the request includes an identifier of the media content. In this step, the CDN node may receive an instruction from a CDN management node to trigger the buffer request for the media content, or the CDN node may actively initiate the buffer request for the media content according to a buffer strategy of the CDN node itself.

If the content is the sliced content, the content source station acquires fragment list information of the media content according to the identifier of the media content in the buffer request for the media content sent by the CDN node, and returns the fragment list information to the CDN node. If the content is the not-sliced content, the content source station slices the media content in real time to generate fragment list information of the media content, and returns the fragment list information to the CDN node. In the fragment list information of the media content returned by the content source station to the CDN node in this step, the number of fragments is N.

The CDN node selects the first-part fragment according to the fragment list information of the media content returned by the content source station, and sequentially sends download requests for single fragments to the content source station, where a download request for a single fragment includes an identifier of a fragment. In this step, the number M of fragments of the media content downloaded by the CDN node from the content source station is less than the total number N of fragments of the media content in the content source station.

The content source station receives a download request for each fragment sent by each CDN node, reads the local storage of the content source station according to the identifier of the fragment, obtains the media content data of the specified fragment, and returns the media content data of the specified fragment to the CDN node.

The CDN node stores multiple fragments returned by the content source station in the CDN node.

### User terminal service scheduling process:

A user terminal sends a media service redirection request to a CDN scheduling node.

The CDN scheduling node returns, according to a principle of proximity, information of a CDN node to which the user terminal belongs to the user terminal.

### User terminal media service request process:

A user terminal initiates a service request for media content to the CDN node, where the request carries an identifier of the media content.
The CDN node reads, according to the identifier of the media content requested by the user terminal, storage in the CDN node, and returns the fragment list information of the media content to the user terminal, where the number of fragments in the fragment list information is N, and the fragment list information includes the identifier of each fragment.
After acquiring the fragment list information of the media content returned by the CDN node, the user terminal preferentially initiates download requests for the first M fragments in the fragment list to the CDN node, where each request includes an identifier of a fragment.
The CDN node receives the download requests for single fragments initiated by the user terminal, reads the storage of the CDN node for the first M fragments according to the identifiers of the fragments, and directly returns the content of the fragments to the user terminal.
In the process of acquiring the first M fragments, the user terminal processes the first M fragments and converts the first M fragments into media services. For video services, after receiving the first fragment, the user terminal transfers the media content data of the first fragment to a video decoding module. The video decoding module of the user terminal converts the media content data into video pictures, the video pictures are played, and the media service starts.

Processing of a service request for remaining fragments of the media content by the terminal may include steps described below.
The user terminal initiates a download request for the remaining fragments to the CDN node, where the number of fragments requested to be downloaded does not exceed N-M, and each request includes an identifier of a fragment. The user terminal waits for the CDN node to return results.
After receiving the download request for the remaining fragments initiated by the user terminal, the CDN node uses the identifiers of the fragments in the request sent by the user to send a download request for the same fragment identifiers to the content source station.
The content source station reads the local storage of the content source station according to the fragment identifiers in the download request for the remaining fragments sent by the CDN node, and returns the remaining fragments to the CDN node.
After obtaining the remaining fragments, the CDN node returns the remaining fragments to the user terminal.
The user terminal receives and processes the remaining fragments, and continues to convert the remaining fragments into a media service.
Usually, the same protocol such as one of RTSP/HTTP/RTMP is used for all of the above-mentioned buffer request for the media content, receiving and sending fragment list information download request for remaining fragments, sending remaining fragments to the lower entity, and the like.
In the embodiment of the present invention, the content delivery and service providing methods of the CDN network are improved, so that when the content delivery is performed, the CDN node requests the fragment list from the content source station or the upper node, and then merely the first-part fragment of the media content is delivered to the CDN node according to the fragment sequence in the fragment list, so that the CDN node can store a large number of first-part fragments of different pieces of content merely by consuming less storage. When the user terminal requests a content service from the CDN node, the CDN node directly reads the local first-part fragment and then immediately returns the local first-part fragment to the user terminal, and the user terminal receives the data of the first-part fragment returned by the CDN node and starts the content service. Since the CDN node stores a large number of first-part fragments of different pieces of content, the CDN node, as a whole, can provide services with fast response speed for more pieces of content.
It is to be noted that in practical applications, a CDN may be deployed into a three-level networking, i.e. the CDN includes a central node, a region node and an edge node, and even be deployed into more levels. The embodiment of the present invention is also applicable to CDN nodes of various levels and different networking, and can be used individually on nodes of various levels of the CDN, or can be used simultaneously or nested on CDN nodes of multiple levels. These scenarios are all variations of the present application and all belong to the scope of the present application. For example, CDN nodes of different levels can independently set the numbers of first-part fragments according to their own selection strategies of first-part fragments, that is, on CDN nodes of different levels, the numbers of first-part fragments of the same media content may be different.
The embodiment of the present invention can have various application scenarios. For the transmission protocol, the embodiment of the present invention can be applied to CDN nodes adopting the OTT streaming media technology, and the transmission protocol includes the HLS, DASH, MSS, HDS and the like. The embodiment of the present invention can also be applied to CDN nodes of the RTSP streaming media technology of IPTV. For the node position, the embodiment of the present invention can be applied to CDN nodes of all levels such as a CDN central node and a CDN edge node. In the aspect of the first-part fragment, the embodiment of the present invention can be applied to the situations of single-track sessions and multi-track sessions, and can also be applied to scenarios such as a self-adaptation scenario in which the first-part fragment includes multiple files.

Application examples are described below.
Application example one: HLS integrated audio-video single-track session video playing is taken as an example for illustration.
The system in this application example includes one CDN management node, one HLS content source station, one CDN node and one user terminal iPad. The CDN node directly interacts with the content source station by using an HLS protocol, and the CDN node provides an HLS video playing media service for the terminal. The identifier of the media content is hlscid in the content source station, and the media content is sliced into 15 transport stream (TS) fragments in the content source station in advance, namely N = 15. Identifiers of the 15 fragments are hlscid-xx.ts (the value of xx ranges from 01 to 15). The content source station generates a media fragment list information file hlscid.m3u8 of the media content hlscid in advance, and the file includes fragment list information of the media content hlscid. In this application example, the content of hlscid.m3u8 is as described below.
#EXTM3U
#EXT-X-TARGETDURATION: 8
#EXT-X-MEDIA-SEQUENCE:92595
#EXTINF:8,
hlscid-01.ts
#EXTINF:8,
hlscid-02.ts
..... (For space considerations, hiscid-03.ts to hiscid-14.ts are omitted here)
#EXTINF:8,
hlscid-15.ts
Note: For space considerations, merely key fields are listed in this application example, and for the detailed format, reference is made to the HLS Specification.

As shown in FIG. 3, a media content delivery process is described below.
In step 301, the CDN management node publishes a content delivery message to the CDN node, where the message carries the identifier hlscid of the media content.
In step 302, the CDN node initiates an HTTP download request (i.e., a buffer request) for the media content hlscid to the content source station, where a uniform resource locator (URL) in the request message carries the identifier hlscid of the media content.
In step 303, the content source station returns an HTTP download response to the CDN node, where the response message includes the media fragment list information file hlscid.m3u8 of the content hlscid.

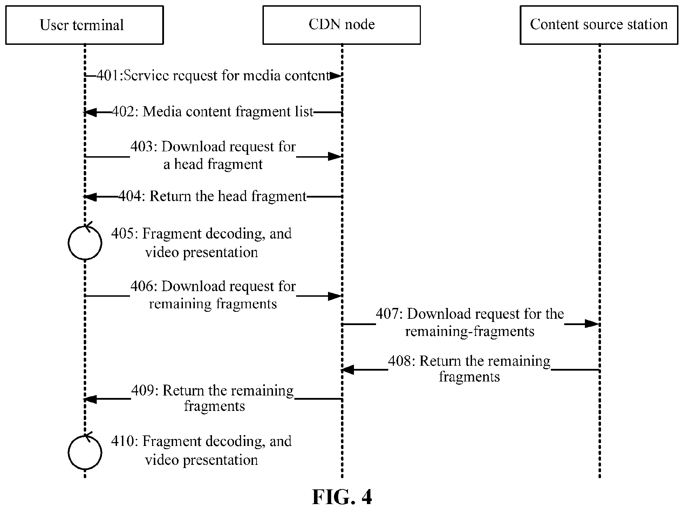

In step 304, the CDN node first stores the media fragment list information file hlscid.m3u8 to a storage medium of the CDN node, reads the media fragment list information file hlscid.m3u8, obtains fragment information, and selects the first three fragments as the first-part fragment (abbreviated as the head fragment) according to a selection strategy of the first-part fragment. The fragment identifiers are hlscid-01.ts, hlscid-02.ts and hlscid-03.ts respectively. The CDN node sequentially sends HTTP download requests (i.e., download requests for the head fragment) to the content source station, where the request messages sequentially include the identifier hlscid-01.ts of the first fragment, the identifier hlscid-02.ts of the second fragment, and the identifier hlscid-03.ts of the third fragment.
In step 305, the content source station returns an HTTP download response to the CDN node, and separately returns a media file of the first fragment hlscid-01.ts, a media file of the second fragment hlscid-02.ts and a media file of the third fragment hlscid-03.ts to the CDN node.
In step 306, the CDN node stores the content of the first three fragments hlscid-01.ts ∼ hlscid-03.ts of the media content on the storage medium in the CDN node.
As shown in FIG. 4, a process in which the user terminal requests the first-part fragment of the media content is described below.
In step 401, the user terminal sends an HTTP playing request for the media content hlscid to the CDN node, where a URL in the request carries the identifier hlscid of the media content.
In step 402, the CDN node reads, according to the identifier hlscid of the media content requested by the user terminal, the fragment list information file stored in the CDN node, and returns the fragment list information file hlscid.m3u8 of the media content stored in the step 304 to the user terminal.
In step 403, the user terminal reads the fragment list information file hlscid.m3u8 of the media content returned by the CDN node to obtain identifiers of fragments, and the user terminal may firstly select to download the first fragment, or may simultaneously request to download the first three fragments, or may simultaneously download all the fragments. Taking simultaneously requesting to download the first three fragments as an example, the user terminal acquires the identifier hlscid-01.ts of the first fragment, the identifier hlscid-02.ts of the second fragment and the identifier hlscid-03.ts of the third fragment, and separately sends download requests, where the download requests respectively include the identifiers hlscid-01.ts ∼ hlscid-03.ts of the first three fragments.
In step 404, the CDN node receives the download requests for the first-part fragment initiated by the user terminal, reads the storage of the CDN node according to the identifiers hlscid-01.ts ∼ hlscid-03.ts of the fragments, and returns the content of the fragment files hlscid-01.ts ∼ hlscid-03.ts to the user terminal.

In step 405, after acquiring and receiving the content of the first fragment hlscid-01.ts returned by the CDN node, the user terminal transfers data of the first fragment to a video decoding module, the data is decoded and quickly converted into a video picture, and the media service starts. In addition, after receiving the content of the second fragment hlscid-01.ts and the content of the third fragment hlscid-03.ts returned by the CDN node, the user terminal transfers data of the second fragment and data of the third fragment to the video decoding module and the data of the second fragment and the data of the third fragment are quickly converted into video pictures.
The user terminal may initiate download requests for the remaining 12 fragments in parallel and independently each time, and for each fragment, the following four steps are adopted.
In step 406, the user terminal sequentially initiates the download requests for the remaining fragments to the CDN node, where each request includes an identifier (i.e., hlscid-04 to hlscid-15) of a corresponding fragment; and waits for the CDN node to return results.
In step 407, after receiving download requests for the remaining fragments initiated by the user terminal, the CDN node sends download requests of the same identifiers of fragments to the content source station, where the requests carry the identifiers (i.e., hlscid-04 to hlscid-15) of the fragments.
In step 408, the content source station reads the local storage of the content source station according to the identifiers (i.e., hlscid-04 to hlscid-15) of the fragments in the download requests for the remaining fragments sent by the CDN node, and returns the remaining fragments to the CDN node.
In step 409, after acquiring the content of the remaining fragments, the CDN node returns hlscid-02 to hlscid-15 to the user terminal, and the user terminal transfers data of the fragments to the video decoding module of the user terminal.
In step 410, the video decoding module of the user terminal continuously receives the data of the remaining fragments, and then receives the remaining fragments, performs decoding, and continues to convert the remaining fragments into video pictures for display.
As long as the second fragment can be downloaded from the beginning of the video picture display to the end of the video playing of the first fragment hlscid-01.ts, the continuous playing of the second fragment can be achieved, and the continuous playing of the entire media content can be achieved through such a cycle.

Application example two: The media playing of separated DASH audio and video is taken as an example for illustration.
The system in this application example includes one CDN management node, one DASH content source station, one CDN service node and one user terminal with a Chrome browser. The CDN node directly interacts with the content source station by using a DASH protocol, and the CDN node provides HTTP+DASH media playing services for the terminal. In the content source station, the media content is dual-track, and an identifier of the media content is dashcid. The media content is sliced into 10 period fragments in advance in the content source station, that is, N = 10. The duration of the first period is 5 seconds, and the duration of each of the remaining periods is 10 seconds. Two media files are included in each period, and are one video file named dashvideo-xx.mp4 (the value of xx ranges from 01 to 10) and one audio file named dashaudio-xx.mp4 (the value of xx ranges from 01 to 10). In this embodiment, the first-part fragment refers to dashvideo-01.mp4 and dashaudio-01.mp4. The content source station generates a media fragment list information file dashcid.mpd of the media content dashcid in advance. This file includes file information of 10 period fragments, i.e., information of 20 files in total, and the content thereof is as described below.

```
 <?xml version="1.0" encoding="UTF-8"?>
 <MPD mediaPresentationDuration="PT0H1M55S" minBufferTime="PT0H0M5S">
    <Period start="PT0S" duration="PT0H0M5S">
        <AdaptationSet mimeType="video/mp4" contentType="video">
           <Role schemeIdUri="urn:mpeg:dash:role:2011" value="main"/>
           <Representation id="Video1.1.5.1" codecs="avc1.64001E">
               <BaseURL>dashvideo-01.mp4</BaseURL>
           </Representation>
        </AdaptationSet>
        <AdaptationSet mimeType="audio/mp4" contentType="audio" >
           <Role schemeIdUri="urn:mpeg:dash:role:2011" value="main"/>
           <Representation id="Audio1.1.1" bandwidth="34450" audioSamplingRate="48000">
               <BaseURL>dashaudio-01.mp4</BaseURL>
           </Representation>
        </AdaptationSet>
    </Period>
    <Period start="PT0S" duration="PT0H0M5S">
        <AdaptationSet mimeType="video/mp4" contentType="video">
           <Role schemeIdUri="urn:mpeg:dash:role:2011" value="main"/>
           <Representation id="Video1.1.5.1" codecs="avc1.64001E">
               <BaseURL>dashvideo-01.mp4</BaseURL>
           </Representation>
        </AdaptationSet>
        <AdaptationSet mimeType="audio/mp4" contentType="audio">
           <Role schemeIdUri="urn:mpeg:dash:role:2011" value="main"/>
           <Representation id="Audio1.1.1" bandwidth="34450" audioSamplingRate="48000">
               <BaseURL>dashaudio-01.mp4</BaseURL>
           </Representation>
        </AdaptationSet>
    </Period>
    ... (Periods 3 to 10 are omitted here)
 </MPD>
```

Note: For space considerations, merely key fields are listed in this application example, and for the detailed format, reference is made to the DASH Specification.

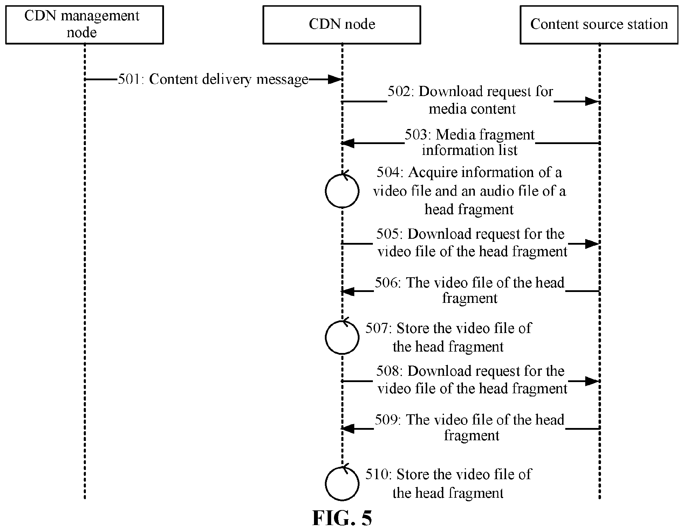

As shown in FIG. 5, a media content delivery process is described below.
In step 501, the CDN management node publishes a content delivery message to the CDN node, where the message carries the identifier dashcid of the media content.
In step 502, the CDN node initiates an HTTP download request for the media content dashcid to the content source station, where a URL in the request message carries the identifier dashcid of the media content.
In step 503, the content source station returns an HTTP download response to the CDN node, where the response message includes the media fragment list information file dashcid.mpd of the content dashcid.
In step 504, the CDN node first stores the media fragment list information file dashcid.mpd, reads the media fragment list information file dashcid.mpd, parses the mpd file to obtain two files dashvideo-01.mp4 and dashaudio-01.mp4 included in the first period fragment, and starts two download tasks in parallel. In one task, steps 505 ∼ 507 are performed for downloading the head fragment of the video, and in the other task, steps 508 ∼ 510 are performed for downloading the head fragment of the audio. The two download tasks are performed in no sequence.
In step 505, an HTTP download request is sent to the content source station, where the request message includes the identifier dashvideo-01.mp4 of the video file of the first fragment.
In step 506, the content source station returns an HTTP download response to the CDN node, and returns the media file dashvideo-01.mp4 of the first fragment to the CDN node.
In step 507, the CDN node stores the content of the video file dashvideo-01.mp4 of the first fragment of the media content on a storage medium in the CDN node.
In step 508, an HTTP download request is sent to the content source station, where the request message includes the identifier dashaudio-01.mp4 of the audio file of the first fragment.

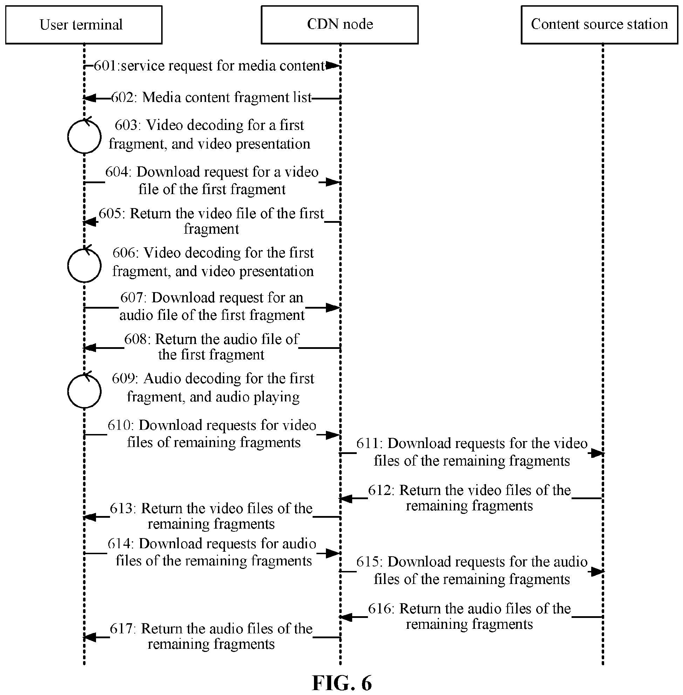

In step 509, the content source station returns an HTTP download response to the CDN node, and returns the media file, the audio file dashaudio-01.mp4 of the first fragment, to the CDN node. In step 510, the CDN node stores the content of the audio file dashaudio-01.mp4 of the first fragment of the media content on the storage medium in the CDN node.
As shown in FIG. 6, a process in which the user requests the head fragment of the media content. In step 601, the user terminal sends an HTTP playing request for the media content dashcid to the CDN node, where a URL in the request carries the identifier dashcid of the media content.
In step 602, the CDN node reads the storage in the CDN node according to the identifier dashcid of the media content requested by the user terminal, and returns the fragment list information file dashcid.mpd of the media content stored in the step 504 to the user terminal.
In step 603, the user terminal reads the fragment list information file dashcid.mpd of the media content returned by the CDN node, and obtains the identifier dashvideo-01.mp4 of the video file and the identifier dashaudio-01.mp4 of the audio file of the first fragment. Then, two tasks are started. In one task, steps 604 ∼ 606 are performed, and in the other task, steps 607 ∼ 609 are performed. The two tasks may be executed in parallel without a sequence.
In step 604, the user terminal initiates an HTTP download request to the CDN node, where the request includes the identifier dashvideo-01.mp4 of the video file of the first fragment.
In step 605, the CDN node receives the download request for the video file of the first fragment initiated by the user terminal, reads the storage of the CDN node according to the identifier dashvideo-01.mp4 of the video file of the fragment, and directly returns the content of the fragment file dashvideo-01.mp4 to the user terminal.
In step 606, after acquiring and receiving the content of the video file dashvideo-01.mp4 of the first fragment returned by the CDN node, the user terminal transfers the data of the first fragment to a video decoding module. The decoding module starts decoding and outputs a video signal to a terminal screen, and a picture starts to be played on the terminal screen.
In step 607, the user terminal initiates an HTTP download request to the CDN node, where the request includes the identifier dashaudio-01.mp4 of the audio file of the first fragment.
In step 608, the CDN node receives the download request for the audio file of the first fragment initiated by the user terminal, reads the storage of the CDN node according to the identifier dashaudio-01.mp4 of the audio file of the fragment, and directly returns the content of the fragment file dashaudio-01.mp4 to the user terminal.
In step 609, after acquiring and receiving the content of the first fragment dashaudio-01.mp4 returned by the CDN, the user terminal transfers the audio data of the first fragment to an audio decoding module. The decoding module starts decoding and rapidly converts the audio data of the first fragment into sound, and a terminal loudspeaker starts to emit sound.

The user terminal may start two independent download tasks in parallel. One task is to sequentially download the remaining 9 video fragment files according to a sequence, and each video fragment is achieved by using the steps 610 ∼ 613 described below; and the other task is to sequentially download the audio fragments according to the sequence of the audio files, and each audio fragment file is downloaded by using the steps 614 ∼ 617 described below.
In step 610, the user terminal sequentially initiates the download requests for the remaining fragments to the CDN node, where each request includes an identifier dashvideo-yy.mp4 (the value of yy ranges from 02 ∼ 10) of a corresponding fragment video file; and waits for the CDN node to return results.
In step 611, after receiving download requests for video files of the remaining fragments initiated by the user terminal, the CDN node sends download requests for the same video files of the fragment to the content source station, where the requests carry the dashvideo-yy.mp4 (the value of yy ranges from 02 ∼ 10) of the fragments.
In step 612, the content source station reads the local storage of the content source station according to the identifiers dashvideo-yy.mp4 (the value of yy ranges from 02 ∼ 10) of the fragments in the download requests for the video files of the remaining fragments sent by the CDN node, and returns the remaining fragments to the CDN node.
In step 613, after obtaining the content of the video files of the remaining fragments, the CDN node returns the remaining fragments to the user terminal, and the user terminal transfers data of the video files of the remaining fragments to the video decoding module of the user terminal.
In step 614, the user terminal sequentially initiates the download requests for the remaining fragments to the CDN node, where each request includes an identifier dashaudio-yy.mp4 (the value of yy ranges from 02 ∼ 10) of a corresponding fragment audio file; and waits for the CDN node to return results.
In step 615, after receiving the download requests for the audio files of the remaining fragments initiated by the user terminal, the CDN node sends download requests for the same audio files of the fragments to the content source station, where the requests carry the dashaudio-yy.mp4 (the value of yy ranges from 02 ∼ 10) of the fragments.
In step 616, the content source station reads the local storage of the content source station according to the fragment identifiers dashaudio-yy.mp4 (the value of yy ranges from 02 ∼ 10) in the download requests for the audio files of the remaining fragments sent by the CDN node, and returns the remaining fragments to the CDN node.
In step 617, after acquiring the content of the audio files of the remaining fragments, the CDN node returns the remaining fragments to the user terminal, and the user terminal transfers the data of the audio files of the remaining fragments to the audio decoding module of the user terminal.

In the application example, the video decoding module of the user terminal continuously receives video data of the remaining fragments, and then continuously performs decoding, and converts the video data of the remaining fragments into video pictures to be displayed on the screen. The audio decoding module of the user terminal continuously receives audio data of the remaining fragments, and then continuously performs decoding, and converts the audio data of the remaining fragments into sound to output. As long as the video file and audio file corresponding to the fragment in the next period can be downloaded in advance before the fragment playing of one period is finished, continuous audio and video playing can be achieved.

Application example three: The media playing supporting MSS is taken as an example for illustration.
The system in this application example includes one CDN management node, one Internet Information Services (IIS)/Smooth Streaming Server content source station, one CDN service node and one IE browser (with the Silverlight plug-in installed). The CDN node directly interacts with the content source station by using an MSS protocol, and the CDN node provides an MSS video playing media service for the terminal. In the content source station, an identifier of media content is msscid, and the media content is sliced into 50 TS fragments in advance in the content source station, i.e., N = 50. The identifiers of the 50 fragments are msscid-xx.ismv (the value of xx ranges from 01 to 50). The content source station generates a media fragment list information file msscid.smil of the media content msscid in advance. The file includes fragment list information of the media content msscid, and the content thereof is as described below. 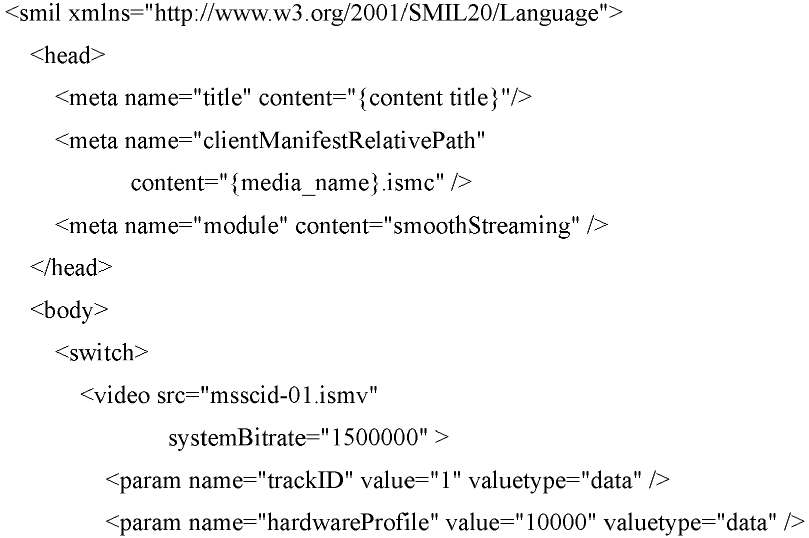 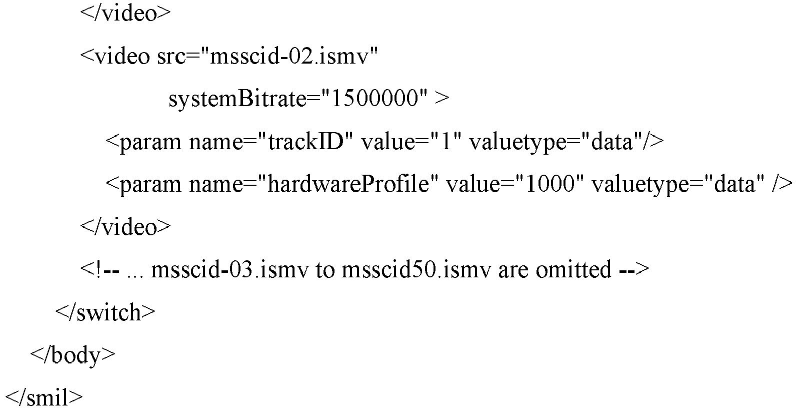 Note: For space considerations, merely key fields are listed in this embodiment, and for the detailed format, reference is made to the MSS Specification.

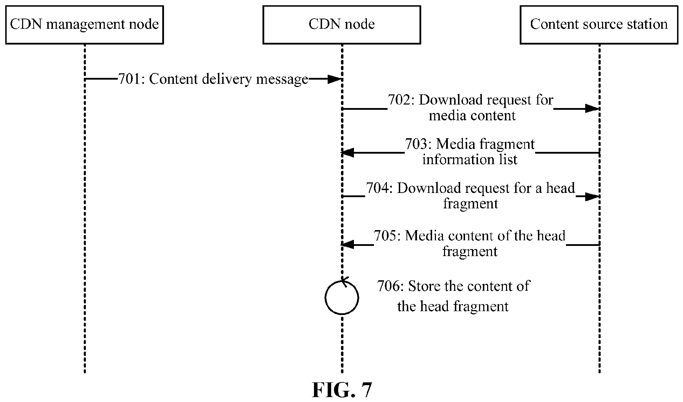

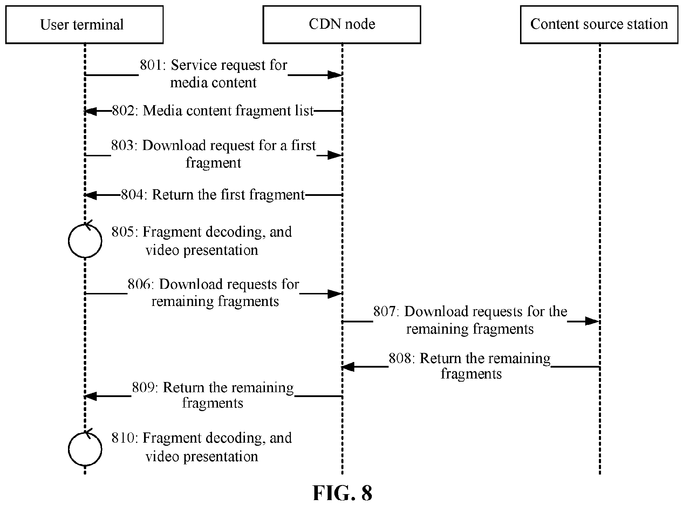

As shown in FIG. 7, a media content delivery process is described below.
In step 701, the CDN management node publishes a content delivery message to the CDN node, where the message carries the identifier msscid of the media content.
In step 702, the CDN node initiates an HTTP download request for the media content msscid to the content source station, where a URL in the request message carries the identifier msscid of the media content.
In step 703, the content source station returns an HTTP download response to the CDN node, where the response message includes a media fragment list information file msscid.smil of the content msscid.
In step 704, the CDN node first stores the media fragment list information file msscid.smil on a storage medium of the CDN node; reads the media fragment list information file msscid.smil to obtain fragment information; selects the first five fragments as the first-part fragment according to a selection strategy of the first-part fragment, where the fragment identifiers are msscid-01.ismv ∼ msscid-05.ismv, respectively; and sequentially sends HTTP download requests to the content source station, where the request messages sequentially include fragment identifiers msscid-Ol.ismv ∼ msscid-05.ismv.
In step 705, the content source station returns an HTTP download response to the CDN node, and returns the media files of the fragments msscid-Ol.ismv ∼ msscid-05.ismv to the CDN node.
In step 706, the CDN node stores the content of the first-part fragment msscid-Ol.ismv ∼ msscid-05.ismv of the media content on the storage medium in the CDN node.
As shown in FIG. 8, a process in which the IE browser requests the first-part fragment of the media content is described below.

In step 801, the IE browser sends an HTTP playing request for the media content msscid to the CDN node, where a URL in the request carries the identifier msscid of the media content.
In step 802, the CDN node reads the storage in the CDN node according to the identifier msscid of the media content requested by the IE browser, and returns the fragment list information file msscid.smil of the media content stored in the step 704 to the IE browser.
In step 803, the IE browser reads the fragment list information file msscid.smil of the media content returned by the CDN node to obtain identifiers of fragments, and the user terminal may first select to download the first fragment, or may simultaneously request to download the first five fragments, or may simultaneously download all the fragments. Taking simultaneously downloading all the fragments as an example, the identifier msscid-Ol.ismv of the first fragment is obtained firstly, where the request includes the identifier msscid-Ol.ismv of the first fragment. In step 804, the CDN node receives a download request for the first fragment initiated by the IE browser, reads the storage of the CDN node according to the identifier msscid-01 of the fragment, and directly returns the content of the fragment file msscid -01.ismv to the IE browser.
In step 805, after acquiring and receiving the content of the first fragment msscid-Ol.ismv returned by the CDN node, the IE browser transfers data of the first fragment to a video decoding module, the data is decoded and quickly converted into a video picture, and a media service starts. The IE browser starts multiple parallel download tasks, and preferentially downloads the fragment files ordered first according to download requests for the remaining 49 fragments initiated each time. For example, two download tasks are started, one download task is to download msscid-jj.ismv (the values of jj are 01, 03, 05, 07, 09) in sequence, and the other download task is to download msscid-kk.ismv (the values of kk are 02, 04, 06, 08, 10). In a download task, a single fragment file is downloaded by using the four steps described below.
In step 806, the IE browser sequentially initiates the download requests for the second fragment to the fiftieth fragment to the CDN node, where each request includes an identifier (i.e., msscid-02 to msscid-50) of a corresponding fragment; and waits for the CDN node to return results.
In step 807, after receiving the download requests for the second fragment to the fiftieth fragment initiated by the IE browser, the CDN node acquires the second fragment to the fifth fragment locally and send them to the user terminal, and sends download requests for the sixth fragment to the fiftieth fragment to the content source station, where the requests carry identifiers (i.e., msscid-06 to msscid-50) of the fragments.
In step 808, the content source station reads the local storage of the content source station according to the fragment identifiers (i.e., msscid-06 to msscid-50) in the download requests for the sixth fragment to the fiftieth fragment sent by the CDN node, and returns the remaining fragments to the CDN node.

In step 809, after obtaining the content of the remaining fragments, the CDN node returns the remaining fragments to the IE browser, and the IE browser transfers data of the remaining fragments to the video decoding module of the IE browser.
In this application example, the video decoding module of the IE browser continuously receives the data of the remaining fragments, and then receives the remaining fragments, performs decoding, and converts the remaining fragments into video pictures for display. As long as the file of the next fragment can be downloaded in advance before the playing of one fragment is finished, continuous playing can be achieved.

Application example four: it is illustrated that multiple code rates exist to support HDS integrated audio-video session, and how to implement the present application (multiple code rates are also applicable to DASH and HLS) in a scenario where various terminals are accessed and different terminals use different code rates.
The system in this application example includes one CDN management node, one Adobe/Flash Video (FLV) Server content source station, one CDN service node, and one Chrome browser (with the flash plug-in installed). Chrome 1 has a higher network access bandwidth of 10M. One android mobile phone is accessed via a 4G network and has a smaller bandwidth. The CDN node directly interacts with the content source station by using an HTTP/HDS protocol. The CDN node provides HTTP/FLV video playing media services for two terminals. In the content source station, an identifier of media content is hdscid, the media content is sliced into 10 periods in advance in the content source station, and each period includes two fragment files with video code rates of 4 Mb and 600 Kb, respectively. The identifiers of the fragments with the code rate of 4 M are hdscid-4000-xx.flv (the value of xx ranges from 01 to 10), respectively. The identifiers of the fragments with the code rate of 600 K are hdscid-600-xx.flv. The content source station generates a media fragment list information file hdscid.mainefest.xml of the media content hdscid in advance, where the file includes the fragment list information of the media content hdscid and the content thereof is as described below.

```
 <?xml version="1.0" encoding="utf-8"?>
 <manifest xmlns="http://ns.adobe.com/f4m/1.0" version="3.0">
 <id>myvideo</id>
 <label>English</label>
 <lang>en</lang>
 <streamType>recorded</streamType>
 <duration>100</duration>
 <mimeType>video/mp4</mimeType>
 <baseURL>http://example.com/</baseURL>
 <bootstrapInfo profile="named" id="boot01 fragmentDuration="4">
 (BASE64 encoding of bootstrap information)
 </bootstrapInfo>
 <bootstrapInfo profile="named" id="boot02" fragmentDuration="4">
 (BASE64 encoding of bootstrap information)
 </bootstrapInfo>
 <bootstrapInfo profile="named" id="boot10" fragmentDuration="4">
 (BASE64 encoding of bootstrap information)
 </bootstrapInfo>
 <media url="hdscid-4000-01.flv" bitrate="4000" bootstrapInfoId="boot01"/>
 <media url="hdscid-600-01.flv" bitrate="600" bootstrapInfold="boot01"/>
 <media url="hdscid-4000-02.flv" bitrate="4000" bootstrapInfoId="boot02"/>
 <media url="hdscid-600-02.flv" bitrate="600" bootstrapInfoId="boot02"/>
 <!-- hdscid-4000-03.flv to hdscid-4000-10.flv are omitted here-->
 <!-- hdscid-600-03.flv to hdscid-600-10.flv are omitted here-->
 <media url="hdscid-4000-01.flv" bitrate="4000" bootstrapInfoId="boot10"/>
 <media url="hdscid-600-01.flv" bitrate="600" bootstrapInfoId="boot10"/>
 </manifest>
```

Note: For space considerations, merely key fields are listed in this embodiment, and for the detailed format, reference is made to the HDS Specification.

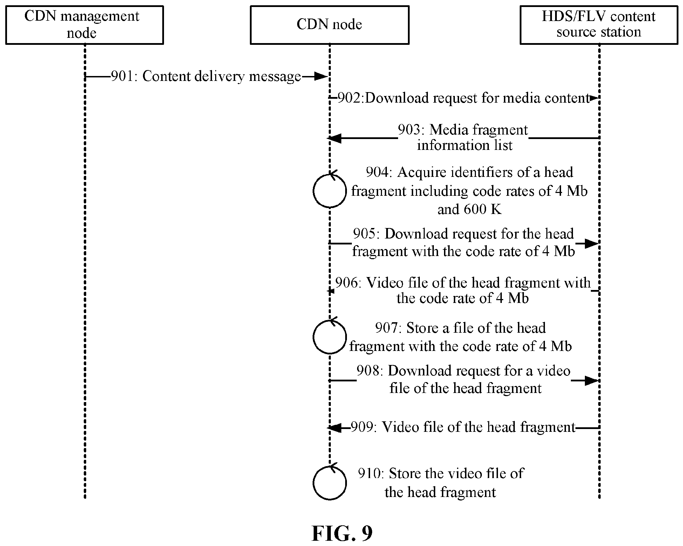

As shown in FIG. 9, a media content delivery process is described below.
In step 901, the CDN management node publishes a content delivery message to the CDN node, where the message carries the identifier hdscid of the media content.
In step 902, the CDN node initiates an HTTP download request for the media content hdscid to the content source station, where a URL in the request message carries the identifier hdscid of the media content.
In step 903, the content source station returns an HTTP download response to the CDN node, where the response message includes the media fragment list information file hdscid.manifest.xml of the content hdscid; and the format of the content is 4-hdscid.mainefest.xml.
In step 904, the CDN node first stores the media fragment list information file hdscid.manifest.xml on a storage medium of the CDN node, and reads the media fragment list information file hdscid.manifest.xml to obtain identifiers hdscid-4000-01.flv and hdscid-600-01.flv of fragment files with two code rates in the first fragment period in the terminal, and then starts two download tasks in parallel. In one task, steps 905 ∼ 907 are performed for downloading the audio-video first fragment with the code rate of 4 M. In the other task, steps 908 ∼ 910 are performed for downloading the audio-video first fragment with the code rate of 600 K. The two download tasks are performed in no sequence.
In step 905, an HTTP download request is sent to the content source station, where the request message includes the identifier hdscid-4000-01.flv of the video file of the first fragment.
In step 906, the content source station returns an HTTP download response to the CDN node, and returns the first-part fragment media file hdscid-4000-01.mp4 with the code rate of 4 Mb in the first fragment period with the code rate of 4 Mb to the CDN node.
In step 907, the CDN node stores the content of the video file hdscid-4000-01.flv of the first fragment with the code rate of 4 Mb of the media content on the storage medium in the CDN node.
In step 908, an HTTP download request is sent to the content source station, where the request message includes the identifier hdscid-600-01.flv of the file of the first fragment with the code rate of 600 K.
In step 909, the content source station returns an HTTP download response to the CDN node, and returns the media file, the audio file hdscid-600-01.flv of the first fragment with the code rate of 600 K, to the CDN node.
In step 910, the CDN node stores the content of the hdscid-600-01.flv of the first fragment with the code rate of 600 K of the media content on the storage medium in the CDN node.

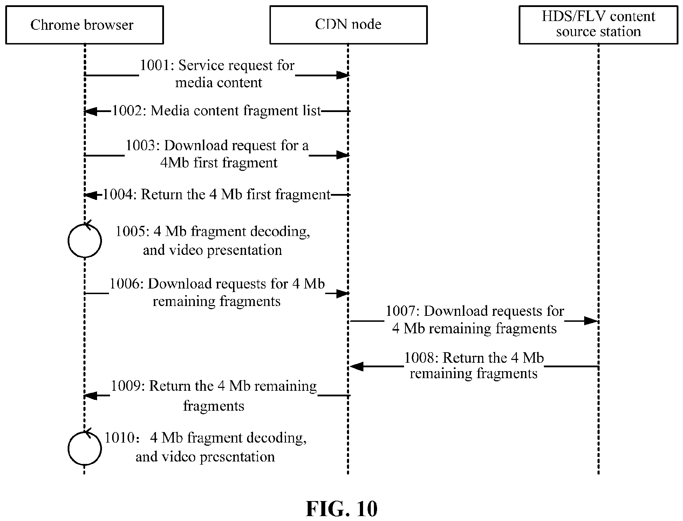

As shown in FIG. 10, a process in which the Chrome browser requests a media service with the code rate of 4 Mb is described below.
In step 1001, the Chrome browser sends an HTTP playing request for the media content hdscid to the CDN node, where a URL in the request carries the identifier hdscid of the media content.
In step 1002, the CDN node reads the storage in the CDN node according to the identifier hdscid of the media content requested by the Chrome browser, and returns the fragment list information file hdscid.manifest.xml of the media content stored in the step 904 to the Chrome browser.
In step 1003, the Chrome browser reads the fragment list information file hdscid.manifest.xml returned of the media content returned by the CDN node, and selects the first fragment hdscid-4000-01.flv with the code rate of 4 Mb according to the bandwidth of the chrome browser itself, where the request includes the identifier hdscid-4000-01.flv of the first fragment.
In step 1004, the CDN node receives a download request for the first fragment initiated by the Chrome browser, reads the storage of the CDN node according to the identifier hdscid-4000-01 of the fragment, and directly returns the content of the fragment file hdscid-4000-01.flv to the Chrome browser.
In step 1005, after acquiring and receiving the content of the first fragment hdscid-4000-01.flv returned by the CDN node, the Chrome browser transfers data of the first fragment to a video decoding module, the data is decoded and quickly converted into a video picture, and a media service starts.
The Chrome browser may start multiple parallel download tasks, and preferentially downloads the fragment files ordered first according to download requests for the remaining 9 fragments initiated each time. For example, two download tasks are started, one download task is to download hdscid-4000-jj.flv (the values of jj are 01, 03, 05, 07 and 09) in sequence, and the other download task is to download hdscid-4000-kk.flv (the values of kk are 02, 04, 06, 08 and 10). In a download task, a single fragment file is downloaded by using the four steps described below.
In step 1006, the Chrome browser sequentially initiates the download requests for the remaining fragments to the CDN node, where each request includes an identifier (i.e., hdscid-4000-02.flv to hdscid-4000-10.flv) of a corresponding fragment; and waits for the CDN node to return results.
In step 1007, after receiving download requests for the remaining fragments initiated by the Chrome browser, the CDN node sends download requests of the same identifiers of fragments to the content source station, where the requests carry the identifiers (i.e., hdscid-4000-02.flv to hdscid-4000-10.flv) of the fragments.
In step 1008, the content source station reads the local storage of the content source station according to the fragment identifiers (i.e., hdscid-4000-02.flv to hdscid-4000-10.flv) in the download requests for the remaining fragments sent by the CDN node, and returns the subsequent fragments to the CDN node.
In step 1009, after obtaining the content of the remaining fragments, the CDN node returns the remaining fragments to the Chrome browser, and the Chrome browser transfers data of the remaining fragments to the video decoding module of the Chrome browser, to achieve continuous video playing.

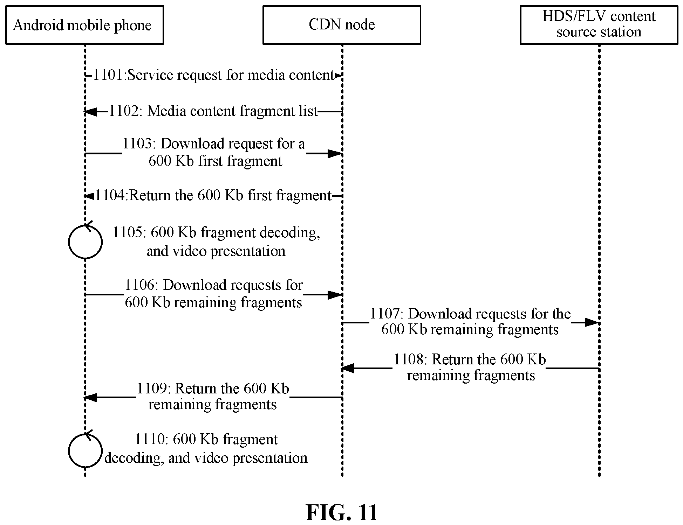

As shown in FIG. 11, a process in which the Android mobile phone requests a media service with the code rate of 600 K is described below.
In step 1101, the Android mobile phone sends an HTTP playing request for the media content hdscid to the CDN node, where a URL in the request carries the identifier hdscid of the media content.
In step 1102, the CDN node reads the storage of the CDN node according to the identifier hdscid of the media content requested by the Android mobile phone, and returns the fragment list information file hdscid.manifest.xml of the media content stored in the step 904 to the Android mobile phone.
In step 1103, the Android mobile phone reads the fragment list information file hdscid.manifest.xml of the media content returned by the CDN node, and selects the head fragment hdscid-600-01.flv with the code rate of 600 K according to the bandwidth of the Android mobile phone itself, where the request includes the identifier hdscid-600-01.flv of the first fragment.
In step 1104, the CDN node receives a download request for the first fragment initiated by the Android mobile phone, reads the storage of the CDN node according to the identifier hdscid-600-01 of the fragment, and directly returns the content of the fragment file hdscid-600-01.flv to the Android mobile phone.
In step 1105, after acquiring and receiving the content of the first fragment hdscid-600-01.flv returned by the CDN, the Android mobile phone transfers the data of the first fragment to the video decoding module, the data is decoded and quickly converted into a video picture, and a media service starts.
The Android mobile phone may start multiple parallel download tasks, and preferentially downloads the fragment files ordered first according to download requests for the remaining 9 fragments initiated each time. For example, two download tasks are started, one download task is to download hdscid-600-jj.flv (the values of jj are 01, 03, 05, 07 and 09) in sequence, and the other download task is to download hdscid-600-kk.flv (the values of kk are 02, 04, 06, 08 and 10). In a download task, a single fragment file is downloaded by using the four steps described below. In step 1106, the Android mobile phone sequentially initiates the download requests for the remaining fragments to the CDN node, where each request includes an identifier (i.e., hdscid-600-02.flv to hdscid-600-10.flv) of a corresponding fragment; and waits for the CDN node to return results.
In step 1107, after receiving download requests for the remaining fragments initiated by the Android mobile phone, the CDN node sends download requests of the same identifiers of fragments to the content source station, where the requests carry the identifiers (i.e., hdscid-600-02.flv to hdscid-600-10.flv) of the fragments.
In step 1108, the content source station reads the local storage of the content source station according to the fragment identifiers (i.e., hdscid-600-02.flv to hdscid-600-10.flv) in the download requests for the remaining fragments sent by the CDN node, and returns the subsequent fragments to the CDN node.
In step 1109, after obtaining the content of the remaining fragments, the CDN node returns the remaining fragments to the Android mobile phone, and the Android mobile phone transfers data of the remaining fragments to the video decoding module of the Android mobile phone, to achieve continuous video playing.

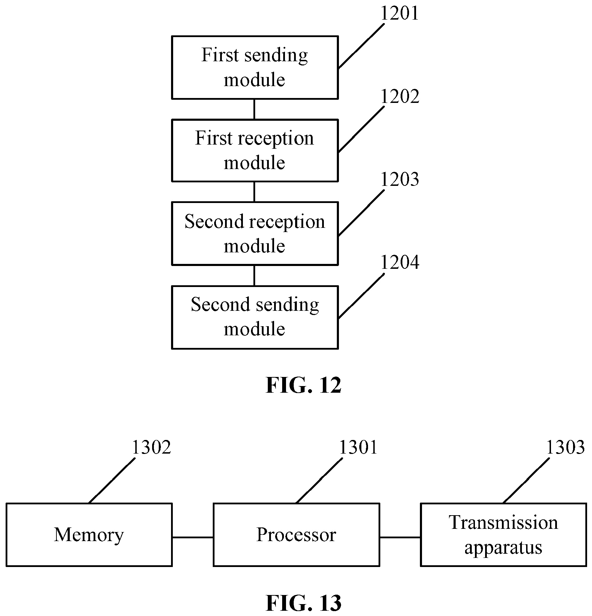

An embodiment of the present invention further provides a content service implementation apparatus. The apparatus is configured to implement the embodiments and implementations described above. What has been described will not be repeated. As used below, the term "module" may be software, hardware or a combination thereof capable of implementing predetermined functions. The apparatus described below in the embodiment may be implemented by software, but implementation by hardware or by a combination of software and hardware is also possible and conceived.
As shown in FIG. 12, the content service implementation apparatus includes a first sending module 1201, a first reception module 1202, a second reception module 1203 and a second sending module 1204.
The first sending module 1201 is configured to send, to an upper entity, a first download request for requesting to download a first-part fragment of media content.
The first reception module 1202 is configured to receive the first-part fragment of the media content sent by the upper entity.
The second reception module 1203 is configured to receive, from a lower entity, a second download request for requesting to download the first-part fragment of the media content.
The second sending module 1204 is configured to send the first-part fragment of the media content to the lower entity.
In the embodiment of the present invention, before the download request for requesting to download the first-part fragment of the media content is received from the lower entity, the first-part fragment of the media content has been acquired from the upper entity and can be directly returned to the lower entity, so that the response delay of the media content service is reduced. In a video traffic application scenario, the response delay from the user terminal requesting the service to the first video picture is relatively small.
In an implementation, the apparatus further includes a third sending module and a third reception module.
The third sending module is configured to send, to the upper entity, a buffer request for requesting to acquire the media content, where the buffer request carries identifier information of the media content.
The third reception module is configured to receive fragment list information of the media content sent by the upper entity.
In an implementation, the first sending module 1201 is further configured to acquire identifier information of the first-part fragment of the media content according to the fragment list information, where the first download request carries the identifier information of the first-part fragment.
In an implementation, the apparatus further includes a fourth reception module and a fourth sending module.
The fourth reception module is configured to receive, from the lower entity, a service request for requesting to acquire the media content, where the service request carries identifier information of the media content.
The fourth sending module is configured to send fragment list information of the media content to the lower entity.
In an implementation, the apparatus further includes a storage module.
The storage module is configured to store the first-part fragment of the media content.
The first reception module is further configured to store the first-part fragment of the media content into the storage module.
The second sending module is configured to read the first-part fragment of the media content stored in the storage module, and send the stored first-part fragment of the media content to the lower entity.
In the embodiment of the present invention, the first-part fragment of the media content is stored locally, and since merely M fragments are stored in a single piece of media content on the CDN node, the storage space of the CDN node consumed by the single piece of media content is reduced to M/N of the storage space in a manner of storing all the media content, so that more different pieces of media content can be stored on the CDN node with the same storage capacity. Meanwhile, since the number of different pieces of media content stored on the CDN node is larger, the hit rates of the CDN to the media service requests of different users are higher, and in a system with multiple CDN nodes, more content can be hit in the method of the present invention compared with the manner of storing all the media content from a system level, and the method of the present invention is superior to the manner of storing all the media content from the aspect of the average access speed of users of the CDN.
In an implementation, the first-part fragment of the media content refers to a minimum fragment file set of all media sessions forming the media content and required to ensure a continuous media service, and are first M fragments among all N fragments of the media content according to a fragment sequence, where M and N are positive integers, and M is less than or equal to N.
In an implementation, the apparatus further includes a determination module.
The determination module is configured to determine the number M of fragments included in the first-part fragment of the media content according to a selection strategy of the first-part fragment. In an implementation, the apparatus further includes a fifth reception module, a fifth sending module, a sixth reception module and a sixth sending module.
The fifth reception module is configured to receive, from the lower entity, a third download request for requesting to download remaining fragments of the media content, where the remaining fragments are N-M fragments, except for M fragments included in the first-part fragment, among all N fragments of the media content.
The fifth sending module is configured to send, to the upper entity, a fourth download request for requesting to download the remaining fragments of the media content.
The sixth reception module is configured to receive the remaining fragments of the media content sent by the upper entity.
The sixth sending module is configured to send the remaining fragments of the media content to the lower entity.
In conclusion, in a CDN system, the present application can obtain better user media service delay under the condition of consuming less storage; the more media content and the more user terminals, the more profits get by using the present application.

As shown in FIG. 13, an embodiment of the present invention further provides a CDN node. The CDN node includes a processor 1301, a memory 1302 configured to store instructions executable by the processor, and a transmission apparatus 1303 configured to perform information transceiving communication according to control of the processor.
The processor is configured to perform the following operations.
A first download request for requesting to download a first-part fragment of media content is sent to an upper entity.
The first-part fragment of the media content sent by the upper entity is received.
A second download request for requesting to download the first-part fragment of the media content is received from a lower entity.
The first-part fragment of the media content is sent to the lower entity.
In an implementation, the processor is further configured to perform the following operations.
Before the first download request for requesting to download the first-part fragment of the media content is sent to the upper entity, a buffer request for requesting to acquire the media content is sent to the upper entity, where the buffer request carries identifier information of the media content.
Fragment list information of the media content sent by the upper entity is received.
In an implementation, the processor is further configured to perform the following operations. Before the second download request for requesting to download the first-part fragment of the media content is received from the lower entity, a service request for requesting to acquire the media content is received from the lower entity, where the service request carries the identifier information of the media content.
The fragment list information of the media content is sent to the lower entity.
In an implementation, the processor is further configured to perform the following operations. Identifier information of the first-part fragment of the media content is acquired according to the fragment list information.
The first download request carries the identifier information of the first-part fragment.
In an implementation, the processor is further configured to perform the following operations.
Before the second download request for requesting to download the first-part fragment of the media content is received from the lower entity, the service request for requesting to acquire the media content is received from the lower entity, where the service request carries the identifier information of the media content.
The fragment list information of the media content is sent to the lower entity.
In an implementation, the processor is further configured to perform the following operations. After the first-part fragment of the media content sent by the upper entity is received, the first-part fragment of the media content is stored locally.
The operation in which the first-part fragment of the media content is sent to the lower entity includes the following operation: the locally stored first-part fragment of the media content is read, and the locally stored first-part fragment of the media content is sent to the lower entity.
In an implementation, the processor is further configured to perform the following operations.
The first-part fragment of the media content is stored in a local memory, SSD or magnetic array. In an implementation, the first-part fragment of the media content refers to a minimum fragment file set of all media sessions forming the media content and required to ensure a continuous media service, and are first M fragments among all N fragments of the media content according to a fragment sequence, where M and N are positive integers, and M is less than or equal to N.
In an implementation, the processor is further configured to perform the following operations.
Before the download request for requesting to download the first-part fragment of the media content is sent to the upper entity, the number M of fragments included in the first-part fragment of the media content is determined according to a selection strategy of the first-part fragment.
In an implementation, the processor is further configured to perform the following operations.
A third download request for requesting to download remaining fragments of the media content is received from the lower entity. The remaining fragments are N-M fragments, except for M fragments included in the first-part fragment, among all N fragments of the media content, where M and N are positive integers, and M is less than or equal to N.
A fourth download request for requesting to download the remaining fragments of the media content is sent to the upper entity.
The remaining fragments of the media content sent by the upper entity are received.
The remaining fragments of the media content are sent to the lower entity.

An embodiment of the present invention further provides a computer-readable storage medium, which is configured to store computer-executable instructions for executing the steps of any content service implementation method described above.
In the embodiment, the storage medium may include, but is not limited to, a USB flash disk, a read-only memory (ROM), a random access memory (RAM), a mobile hard disk, a magnetic disk, an optical disk or another medium capable of storing program codes.
Apparently, it should be understood by those skilled in the art that the above-mentioned modules or steps in the embodiments of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatuses. In some cases, the illustrated or described steps may be executed in sequences different from those described herein, or the modules or steps may be made into integrated circuit modules separately, or multiple modules or steps therein may be made into a single integrated circuit module for implementation. In this way, the embodiments of the present invention are not limited to any particular combination of hardware and software.
Although the implementations disclosed by the present invention are as described above, the content thereof is merely implementations for facilitating the understanding of the present invention and is not intended to limit the present invention. Those skilled in the art to which the present invention pertains may make any modifications and changes on implementation forms and details without departing from the spirit and scope disclosed by the present invention, but the scope of the present invention is still subject to the scope defined by the appended claims.

### INDUSTRIAL APPLICABILITY

As described above, the content service implementation method and apparatus and the content delivery network node provided in the embodiments of the present invention have the following beneficial effects: better user media service delay under the condition of consuming less storage can be obtained; and the more media content and the more user terminals, the more profits get by using the present application.

## Claims

1. A content service implementation method, comprising:
sending, to an upper entity, a first download request for requesting to download a first-part fragment of media content;
receiving the first-part fragment of the media content sent by the upper entity;
receiving, from a lower entity, a second download request for requesting to download the first-part fragment of the media content; and
sending the first-part fragment of the media content to the lower entity.

2. The method of claim 1, wherein before sending, to the upper entity, the first download request for requesting to download the first-part fragment of the media content, the method further comprises:
sending, to the upper entity, a buffer request for requesting to acquire the media content, wherein the buffer request carries identifier information of the media content; and
receiving fragment list information of the media content sent by the upper entity.

3. The method of claim 2, further comprising:
acquiring identifier information of the first-part fragment of the media content according to the fragment list information;
wherein the first download request carries the identifier information of the first-part fragment.

4. The method of claim 1, wherein before receiving, from the lower entity, the second download request for requesting to download the first-part fragment of the media content, the method further comprises:
receiving, from the lower entity, a service request for requesting to acquire the media content, wherein the service request carries identifier information of the media content; and
sending fragment list information of the media content to the lower entity.

5. The method of claim 1, wherein after receiving the first-part fragment of the media content sent by the upper entity, the method further comprises:
storing locally the first-part fragment of the media content; and
wherein sending the first-part fragment of the media content to the lower entity comprises:
reading the locally stored first-part fragment of the media content, and sending the locally stored first-part fragment of the media content to the lower entity.

6. The method of claim 5, wherein storing locally the first-part fragment of the media content comprises:
storing the first-part fragment of the media content in a local memory, a solid state drive, SSD, or a magnetic array.

7. The method of claim 1, wherein the first-part fragment of the media content refers to a minimum fragment file set of all media sessions forming the media content and required to ensure a continuous media service, and the first-part fragment of the media content comprises first M fragments among all N fragments of the media content according to a fragment sequence, wherein M and N are positive integers, and M is less than or equal to N.

8. The method of claim 7, wherein before sending, to the upper entity, the download request for requesting to download the first-part fragment of the media content, the method further comprises:
determining the number M of fragments comprised in the first-part fragment of the media content according to a selection strategy of the first-part fragment.

9. The method of claim 1, further comprising:
receiving, from the lower entity, a third download request for requesting to download remaining fragments of the media content, wherein the remaining fragments are N-M fragments, except for M fragments comprised in the first-part fragment, among all N fragments of the media content, and wherein M and N are positive integers, and M is less than or equal to N;
sending, to the upper entity, a fourth download request for requesting to download the remaining fragments of the media content;
receiving the remaining fragments of the media content sent by the upper entity; and
sending the remaining fragments of the media content to the lower entity.

10. The method of any one of claims 1 to 9, wherein a protocol for sending the first download request, receiving the first-part fragment, receiving the second download request and sending the first-part fragment comprises one of: a HyperText Transfer Protocol, HTTP; a Real Time Stream Protocol, RTSP; or a Real Time Messaging Protocol, RTMP

11. The method of claim 2 or 4, wherein a format of the fragment list information of the media content comprises at least one of: HTTP Live Streaming, HLS; Dynamic Adaptive Streaming over HTTP, DASH; Microsoft Smooth Streaming, MSS; or HTTP Dynamic Streaming, HDS.

12. The method of any one of claims 1 to 9, wherein the upper entity is a content source station or an upper content delivery network node, and the lower entity is a user terminal or a lower content delivery network node.

13. A content service implementation apparatus, comprising:
a first sending module, configured to send, to an upper entity, a first download request for requesting to download a first-part fragment of media content;
a first reception module, configured to receive the first-part fragment of the media content sent by the upper entity;
a second reception module, configured to receive, from a lower entity, a second download request for requesting to download the first-part fragment of the media content; and
a second sending module, configured to send the first-part fragment of the media content to the lower entity.

14. The apparatus of claim 13, further comprising:
a third sending module, configured to send, to the upper entity, a buffer request for requesting to acquire the media content, wherein the buffer request carries identifier information of the media content; and
a third reception module, configured to receive fragment list information of the media content sent by the upper entity.

15. The apparatus of claim 14, wherein the first sending module is further configured to acquire identifier information of the first-part fragment of the media content according to the fragment list information, wherein the first download request carries the identifier information of the first-part fragment.

16. The apparatus of claim 13, further comprising:
a fourth reception module, configured to receive, from the lower entity, a service request for requesting to acquire the media content, wherein the service request carries identifier information of the media content; and
a fourth sending module, configured to send fragment list information of the media content to the lower entity.

17. The apparatus of claim 13, further comprising:
a storage module, configured to store the first-part fragment of the media content;
wherein the first reception module is further configured to store the first-part reception of the media content in the storage module; and
wherein the second sending module is configured to read the first-part fragment of the media content stored in the storage module, and send the stored first-part fragment of the media content to the lower entity.

18. The apparatus of claim 13, wherein the first-part fragment of the media content refers to a minimum fragment file set of all media sessions forming the media content and required to ensure a continuous media service, and the first-part fragment of the media content comprises first M fragments among all N fragments of the media content according to a fragment sequence, wherein M and N are positive integers, and M is less than or equal to N.

19. The apparatus of claim 18, further comprising:
a determination module, configured to determine the number M of fragments comprised in the first-part fragment of the media content according to a selection strategy of the first-part fragment.

20. The apparatus of claim 13, further comprising:
a fifth reception module, configured to receive, from the lower entity, a third download request for requesting to download remaining fragments of the media content, wherein the remaining fragments are N-M fragments, except for M fragments comprised in the first-part fragment, among all N fragments of the media content, and wherein M and N are positive integers, and M is less than or equal to N;
a fifth sending module, configured to send, to the upper entity, a fourth download request for requesting to download the remaining fragments of the media content;
a sixth reception module, configured to receive the remaining fragments of the media content sent by the upper entity; and
a sixth sending module, configured to send the remaining fragments of the media content to the lower entity.

21. A content delivery network node, comprising:
a processor;
a memory configured to store instructions executable by the processor; and
a transmission apparatus configured to perform information transceiving communication according to control of the processor;
wherein the processor is configured to perform following operations:
sending, to an upper entity, a first download request for requesting to download a first-part fragment of media content;
receiving the first-part fragment of the media content sent by the upper entity;
receiving, from a lower entity, a second download request for requesting to download the first-part fragment of the media content; and
sending the first-part fragment of the media content to the lower entity.

22. The content delivery network node of claim 21, wherein the processor is further configured to perform following operations:
before sending, to the upper entity, the first download request for requesting to download the first-part fragment of the media content, sending, to the upper entity, a buffer request for requesting to acquire the media content, wherein the buffer request carries identifier information of the media content; and
receiving fragment list information of the media content sent by the upper entity.

23. The content delivery network node of claim 22, wherein the processor is further configured to perform following operations:
before receiving, from the lower entity, the second download request for requesting to download the first-part fragment of the media content, receiving, from the lower entity, a service request for requesting to acquire the media content, wherein the service request carries the identifier information of the media content; and
sending the fragment list information of the media content to the lower entity.

24. A computer-readable storage medium, configured to store computer programs, wherein the computer programs, when executed, perform the method of any one of claims 1 to 12.
